# FASCICULE DE BREVET EUROPEEN

(11) **EP 0 661 486 B1**
(45) Date de publication et mention de la délivrance du brevet: **03.02.1999**
(21) Numéro de dépôt: 94402465.2
(22) Date de dépôt: 02.11.1994
(51) Int. Cl.: F16K 31/68

(54) **Soupape thermostatique**
Thermostatventil
Thermostatic valve

(30) Priorité: 30.11.1993 FR 9314322
(43) Date de publication de la demande: 05.07.1995
(73) Titulaire: PROCEDES VERNET S.A., 91290 Arpajon (FR)
(72) Inventeur: Auvy, Sylvain, F-91290 Arpajon (FR); Mace, Christian, F-91290 Arpajon (FR)
(74) Mandataire: Bernasconi, Jean

(56) Documents cités:
- DE-A- 3 000 601
- DE-U- 1 972 754
- DE-U- 9 216 490
- FR-A- 1 477 100
- FR-A- 2 279 149

## Description

La présente invention concerne les soupapes thermostatiques destinées à équiper un organe contenant un fluide, par exemple un élément de circuit de refroidissement tel que boîte à eau ou carter à huile, de moteur d'automobile, ces soupapes comportant : un boîtier muni de moyens de sortie de fluide ainsi que de moyens pour sa fixation sur l'organe contenant un fluide, et, montés sur ce boîtier : un siège de soupape; un clapet susceptible de coopérer avec le siège; un élément thermostatique ayant un corps solidaire du clapet et une tige-poussoir prenant appui sur une butée solidaire du boîtier; et un ressort de pression interposé entre le clapet et un appui solidaire du boîtier.

L'invention concerne plus particulièrement une soupape thermostatique de ce type, dans laquelle le siège de soupape est formé par une pièce en matière plastique.

Dans une soupape connue de ce type (voir le brevet français N°1.477.100), le siège de soupape est constituée par une simple bague en matière plastique, qui se prolonge périphériquement vers l'extérieur par une collerette fine, en matière plastique d'un seul tenant avec la bague, destinée à être serrée comme un joint et donc à servir elle-même de joint d'étanchéité, entre l'organe contenant un fluide, et un élément formant boîtier de la soupape. Une cage métallique traverse la bague en matière plastique et s'étend de part et d'autre de cette dernière pour constituer un chassis formant à la fois la butée pour la tige-poussoir de l'élément thermostatique et l'appui pour le ressort de pression.

Dans cette soupape connue, la bague en matière plastique étant dépourvue de tout moyen de renfort et étant, en service, d'une part, constamment sollicitée par le clapet lui-même soumis au ressort de pression et, d'autre part, soumise à des températures élevées, elle est sujette aux voilages ou à d'autres types de déformations. En outre, la collerette-joint d'étanchéité en matière plastique, qui est en permanence soumise à une pression de serrage élevée et qui est également soumise à des températures élevées, est sujette aux fluages, ce qui accroit le risque de rupture d'étanchéité de la liaison boîtier-organe contenant un fluide.

Il en résulte que cette soupape connue présente l'inconvénient d'avoir une tenue au montage et une rigidité du siège nettement insuffisantes, une fiabilité de fonctionnement amoindrie, et une durée de service relativement courte.

Des inconvénients similaires sont présentés par la réalisation selon le modèle d'utilité allemand G 92 16 490.0, qui montre une soupape selon le préambule de la revendication 1, dans lequel la bague en matière plastique formant le siège de soupape est incorporé, venant de moulage, dans un corps ou boîtier en matière plastique muni de pattes de fixation sur l'organe contenant le fluide Le siège étant, comme toujours, loin de l'appui, il risque d'être soumis à des déformations et fluages, auxquels le dispositif s'efforce de répondre par la présence de nervures de renforcement, créant un encombrement supplémentaire pour la pose d'une canalisation telle qu'une durite sur le boîtier, notamment lorsque la sortie de fluide est axiale. En outre le siège de soupape peut subir des contraintes supplémentaires du fait de l'accrochage, à faible distance du siège, de l'étrier métallique qui supporte la poussée du ressort de rappel du clapet.

L'invention remédie à ces inconvénients et a notamment pour but de proposer une soupape thermostatique qui, tout en bénéficiant des avantages inhérents à l'emploi d'un siège de soupape en matière plastique (facilité de fabrication, absence d'usinage, légèreté), présente une excellente fiabilité de fonctionnement ainsi qu'une durée de service longue.

Ce but est atteint conformément à l'invention, par une soupape thermostatique destinée à équiper un organe contenant un fluide , par exemple un élément de circuit de refroidissement tel que boîte à eau ou carter à huile, de moteur d'automobile, et comportant avec un siège de soupape un boîtier muni de moyens de sortie de fluide ainsi que de moyens pour sa fixation sur ledit organe contenant un fluide , et, montés sur ce boîtier : un clapet susceptible de coopérer avec le siège; un élément thermostatique ayant un corps solidaire du clapet et une tige-poussoir prenant appui sur une butée solidaire du boîtier; et un ressort de pression interposé entre le clapet et un appui solidaire du boîtier; cette soupape étant du type dans laquelle ledit siège est formé par une pièce en matière plastique , qui constitue également le boîtier de l'appareil, lesdits moyens de fixation du boîtier et lesdits moyens de sortie de fluide étant venus d'un seul tenant avec la partie formant siège de soupape , de la pièce en matière plastique , caractérisée en ce que la partie formant siège de soupape , de la pièce en matière plastique est munie de moyens métalliques de renforcement surmoulés dans la matière plastique, et s'étendant de façon substantielle sur la périphérie du siège .

Cette ou ces pièces métalliques peuvent, par exemple, s'étendre de façon continue, sur toute la périphérie du siège; alternativement, elles peuvent être seulement présentes en des endroits discrets du siège, ces endroits étant cependant régulièrement répartis sur la périphérie de ce dernier.

Il est avantageux que la ou les pièces métalliques de renforcement s'étendent depuis la partie formant siège jusqu'à la partie formant moyens de fixation, de la pièce en matière plastique.

Selon un mode de réalisation préféré, la partie formant moyens de fixation de la pièce en matière plastique est réalisée sous la forme d'une bride entourant et prolongeant périphériquement vers l'extérieur la partie formant siège, cette bride étant munie de trous pour des organes de vissage, et la ou les pièces métalliques de renforcement s'étendent jusqu'à chaque trous et, à cet endroit, elles s'étendent sur toute l'épaisseur de la bride, c'est-à-dire qu'elles s'étendent d'une face à l'autre de cette dernière.

Ainsi, la présente invention propose un mode de fabrication de soupape thermostatique, qui utilise simultanément le plastique et le métal, et dans lequel une pièce unique en matière plastique renforcée par une (ou plusieurs) pièce métallique insérée en des endroits judicieux dans la pièce, assure les fonctions de chassis portant les différents organes de la soupape, de fixation de l'appareil sur l'organe contenant un fluide, et de raccordements étanche avec cet organe et avec une canalisation de sortie de fluide, et ce, avec un maximum d'efficacité et un poids léger.

Grâce à cette conception multi-fonctionnelle et renforcée en des endroits judicieux, de la pièce en matière plastique, on confère une rigidité suffisante à la bride dans son plan, une résistance au fluage suffisante aux points de serrage de celle-ci, ainsi qu'une rigidité suffisante au siège de soupape.

Cette solution permet en outre :
- un assemblage de l'appareil dans les conditions permettant une automatisation complète,
- la suppression de tout usinage, source de coût élevé,
- l'utilisation de matériaux permettant un recyclage à pratiquement 100%,
- l'interchangeabilité des éléments internes de l'appareil, diminuant le coût d'une réparation.

D'autres caractéristiques et avantages de l'invention ressortiront à la lecture de la description qui va suivre de deux modes de réalisation, description faite en référence aux dessins annexés dans lesquels:
- la figure 1 est une vue en élévation et en coupe verticale selon le plan I-I de la figure 2, d'une soupape selon un premier mode de réalisation de l'invention;
- la figure 1A est une coupe selon le plan A-A de la figure 1;
- la figure 2 est une vue de dessus de la soupape de la figure 1;
- la figure 2A est une section selon le plan II-II de la figure 2;
- la figure 3 est une vue de gauche de la soupape de la figure 1; et
- la figure 4 est une vue de dessus analogue à la figure 2, représentant une soupape selon un deuxième mode de réalisation de l'invention ;
- la figure 5 est une vue en élévation et en coupe verticale d'une soupape selon un troisième mode de réalisation de l'invention ;
- la figure 6 est une vue de dessus de la soupape de la figure 5.

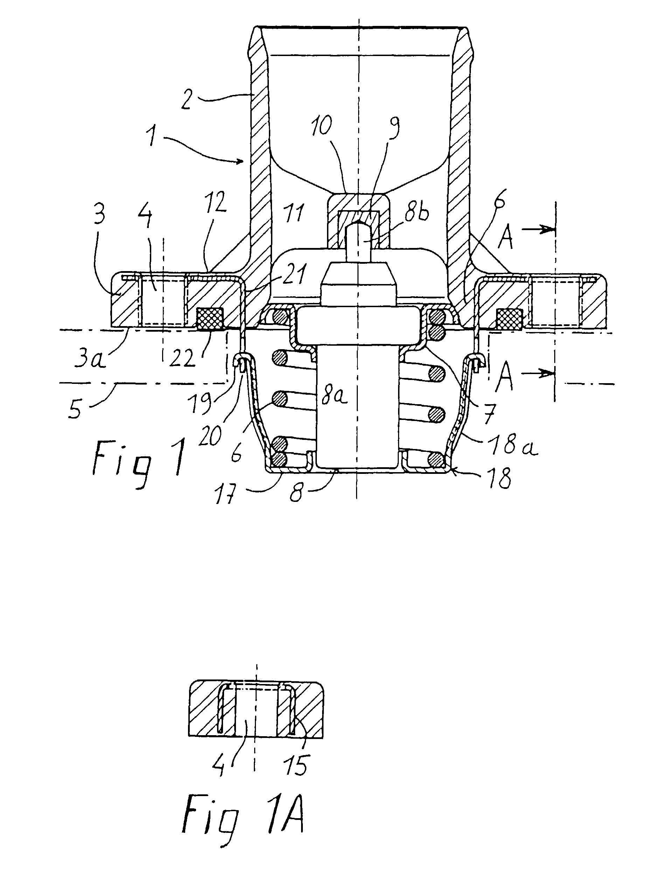

La soupape représentée sur les figure 1 à 3 comprend un boîtier - ou corps- en matière plastique 1 comprenant une partie tubulaire 2 se terminant vers le bas par une partie en forme de bride 3 plane transversale au tube 2, qui est munie de trous 4 pour le montage d'organes de vissage, tels que boulons, destinés à la fixation de la soupape sur la paroi 5 d'un élément contenant un fluide, par exemple un carter d'huile ou une boîte à eau, faisant partie d'un circuit de refroidissement d'un moteur d'automobile.

Le tube 2 forme, par son extrémité libre, raccord pour une canalisation de sortie de fluide (non représentée sur les dessins).

Le corps en matière plastique forme également le siège de soupape 6 destiné à coopérer avec un clapet 7 en tôle découpée et emboutie, d'acier inoxydable.

La soupape comporte en outre, comme il est connu, un élément thermostatique 8 dont le corps 8a est relié mécaniquement de façon étanche et solidaire, au clapet 7, par exemple par soudure. L'élément thermostatique comporte également une tige-poussoir 8b qui prend appui, par l'intermédiaire d'une pièce métallique en forme de godet 9, contre une butée constituée par la zone médiane 10 d'une paroi interne diamétrale 11 du tube 2, venue de moulage avec la pièce 1. La paroi diamétrale 11 est de faible épaisseur de manière à occasionner une perte de charge minimale à l'écoulement de fluide dans le tube 2.

Selon le mode de réalisation des figures 1 à 3, la bride 3, ainsi que la partie 6 formant siège de soupape, sont renforcées par une pièce métallique unique 12 en tôle découpée et emboutie d'acier inoxydable, surmoulée dans la pièce en matière plastique 1.

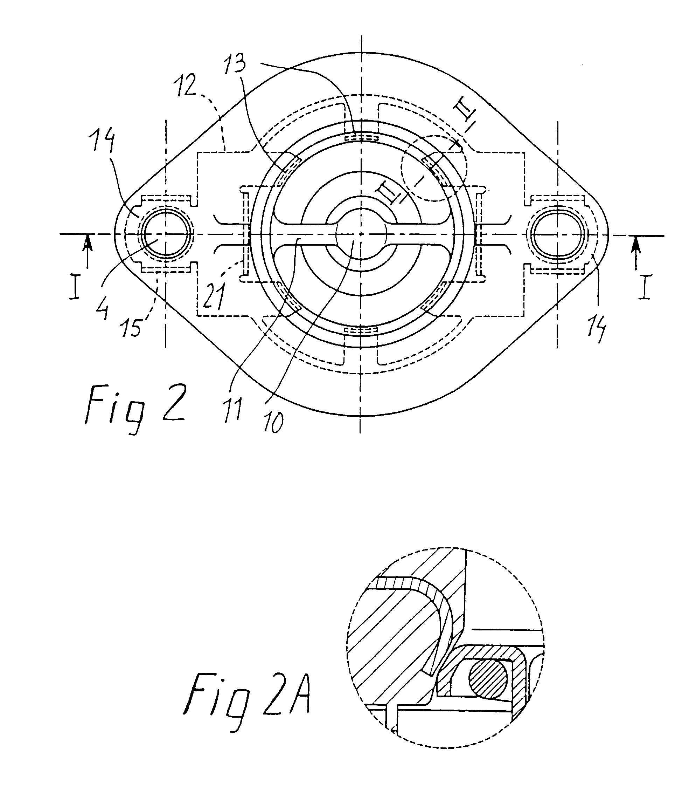

Comme on peut le voir plus particulièrement sur la figure 2, la pièce 12 est convenablement dimensionnée, découpée et localisée dans la pièce 1, de manière à s'étendre dans une zone de bordure de chaque trou 4, et depuis chacune de ces zones jusqu'à la partie formant siège de soupape 6. au niveau du siège 6, la pièce métallique 12 plusieurs, dans l'exemple représenté six, endroits discrets 13 du siège 6, ces endroits étant sensiblement régulièrement répartis sur le pourtour du siège 6 (voir aussi la figure 2A).

Comme le montre la figure 1A, la pièce 12 comporte, dans chacune de ses parties 14 entourant un trou 4, deux languettes repliées à angle droit 15 s'étendant transversalement par rapport au plan général de la bride 3 et depuis une face jusqu'à l'autre face de cette bride. Ceci empêche tout fluage de la bride aux endroits de serrage des organes de vissage permettant la fixation de la soupape sur l'organe 5 contenant un fluide.

Comme il est connu, le clapet 7 est sollicité contre le siège 6 par un ressort de pression 16 prenant appui, d'une part, sur ledit clapet 7 et , d'autre part, sur un appui 17 constitué par la partie centrale d'une pièce en tôle d'acier inoxydable découpée et emboutie en forme d'étrier 18 dont les deux branches 18a présentent à leur extrémité libre un crochet 19 coopérant avec un organe d'attache 20 ménagé dans une partie dépassant à l'extérieur, de la pièce métallique de renfort 12. Ces parties dépassantes sont les extrémités libres de languettes repliées vers le bas 21 de la pièce 12.

Sur sa face inférieure 3a tournée vers la paroi de l'organe contenant un fluide 5, la bride 3 comporte une rainure annulaire dans laquelle est logé un joint d'étanchéité en élastomère 22.

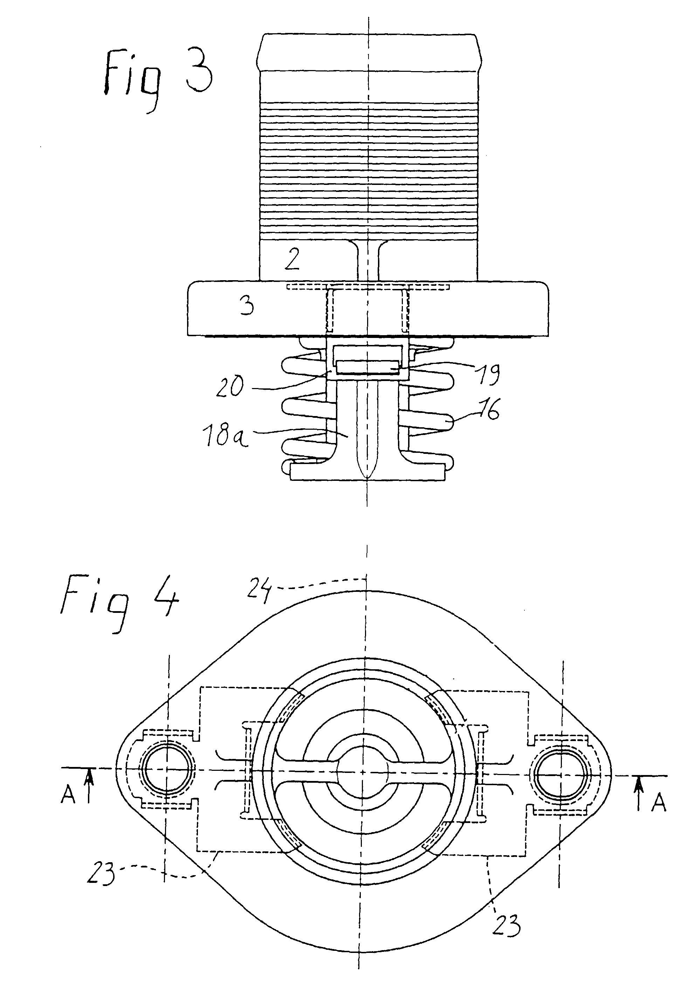

Le mode de réalisation représenté sur la figure 4 ne diffère de celui représenté sur les figures 1 à 3 que par le fait que la pièce métallique unique de renforcement 12 est remplacée par deux pièces métalliques de renforcement 23 symétriques entre elles et situées de part et d'autre du plan vertical médian 24 de la soupape (figure 4).Chaque pièce métallique 23 est identique à une partie latérale correspondante de la pièce 12, et, comme cette partie latérale, elle est présente en deux endroits discrets 13 du siège 6 et elle s'étend depuis ces endroits jusque dans une zone bordant un trou 4 de la bride 3.

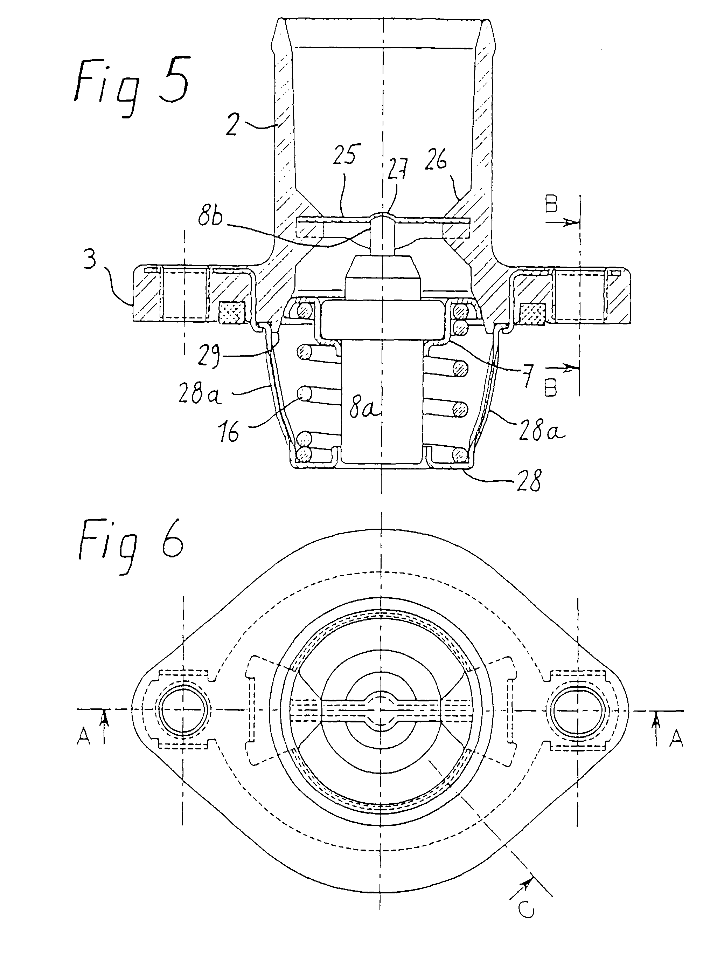

La soupape des figures 5 et 6 diffère de celle des figures 1 à 3 par le fait que la butée contre laquelle porte l'extrémité de la tige-poussoir 8b est constituée par une pièce métallique allongée 25, à section en U, dont les extrémités sont prises par surmoulage dans la matière du tube 2 convenablement épaissie dans les zones 26. Un léger dome 27 est embouti dans la pièce 25 pour centrer la tige-poussoir 8.

Enfin, la pièce en forme d'étrier 28, qui supporte le ressort 16 possède des branches 28a qui viennent se raccrocher, par une extrémité courbée, à des bords également courbés de la pièce métallique de renfort 12, et ceci juste sous la face inférieure de la bride 3 pourvue de rebords 29 empêchant le retrait des extrémités des branches 28a de l'encliquetage ainsi réalisé.

Bien entendu l'invention ne se limite pas aux modes de réalisations qui viennent d'être décrits, mais elle en englobe toutes les variantes restant dans le cadre des revendications annexées. En particulier, au lieu de n'occuper que des endroits discrets 11 du siège 6, la pièce métallique 12 (ou les pièces métalliques 23) peut s'étendre de façon continue sur tout le pourtour du siège 6.

## Revendications

1. Soupape thermostatique destinée à équiper un organe contenant un fluide (5), par exemple un élément de circuit de refroidissement tel que boîte à eau ou carter à huile, de moteur d'automobile, et comportant avec un siège de soupape (6) un boîtier muni de moyens de sortie de fluide ainsi que de moyens pour sa fixation sur ledit organe contenant un fluide (5), et, montés sur ce boîtier : un clapet (7) susceptible de coopérer avec le siège; un élément thermostatique (8) ayant un corps (8a) solidaire du clapet (7) et une tige-poussoir (8b) prenant appui sur une butée (9 à 11) solidaire du boîtier; et un ressort de pression (16) interposé entre le clapet (7) et un appui (17) solidaire du boîtier; cette soupape étant du type dans laquelle ledit siège est formé par une pièce en matière plastique (1), qui constitue également le boîtier de l'appareil, lesdits moyens de fixation (3, 4) du boîtier et lesdits moyens de sortie de fluide (2) étant venus d'un seul tenant avec la partie formant siège de soupape (6), de la pièce en matière plastique (1), caractérisée en ce que la partie formant siège de soupape (6), de la pièce en matière plastique (1) est munie de moyens métalliques de renforcement (12; 23) surmoulés dans la matière plastique, et s'étendant de façon substantielle sur la périphérie du siège (6).

2. Soupape thermostatique selon la revendication 1, caractérisée en ce que lesdits moyens métalliques de renforcement (12; 23) s'étendent depuis la partie formant siège (6) jusqu'à la partie formant moyens de fixation (3, 4), de ladite pièce en matière plastique (1).

3. Soupape thermostatique selon la revendications 2, caractérisée en ce que ladite partie formant moyens de fixation est réalisée sous la forme d'une bride (3) comportant au moins deux trous (4) pour des organes de vissage, et en ce que lesdits moyens métalliques de renforcement (12; 23) s'étendent, à l'endroit desdits trous (4), d'une face à l'autre de ladite bride (3).

4. Soupape thermostatique selon l'une des revendications 1 à 3, caractérisée en ce que lesdits moyens de sortie de fluide sont réalisés sous la forme d'un raccord (2) pour une canalisation de sortie de fluide.

5. Soupape thermostatique selon l'une des revendications 1 à 4, caractérisée en ce que la butée de la tige-poussoir (8b) de l'élément thermostatique (8) est formée par une paroi (11) venue d'un seul tenant avec ladite pièce en matière plastique (1).

6. Soupape thermostatique selon l'une des revendications 1 et 4, caractérisée en ce que la butée de la tige-poussoir (8b) de l'élément thermostatique (8) est formée par une pièce métallique à section en U (25), surmoulée dans ladite pièce en matière plastique (1).

7. Soupape thermostatique selon l'une des revendications 1 à 6, caractérisée en ce que ledit clapet de soupape (7) est métallique.

8. Soupape thermostatique selon l'une des revendications 1 à 7, caractérisée en ce que lesdits moyens de renforcement métalliques (12; 23) forment, par des parties (21) dépassant à l'extérieur de la pièce en matière plastique (1), des organes d'attache (20) pour un élément métallique (28) de pré-contrainte du ressort (16), qui constitue, par son extrémité opposée auxdits organes d'attache, ledit appui (17) pour le ressort de pression (16).

9. Soupape thermostatique selon la revendication 8, caractérisée en ce que lesdites parties dépassantes reçoivent les extrémités de l'élément métallique (28) juste sous la surface des moyens de fixation en forme de bride (3), en présence de rebords (29) de la bride empêchant le retrait dudit élément métallique.

10. Soupape thermostatique selon l'une des revendications 1 à 9, caractérisée en ce que ledit clapet (7) et/ou lesdits moyens métalliques de renforcement (12; 23) et/ou ledit élément métallique de pré-contrainte (18), sont constitués en tôle métallique découpée et emboutie, de préférence en tôle d'acier inoxydable.

11. Soupape thermostatique selon l'une des revendications 1 à 10, caractérisée en ce que lesdits moyens de fixation (3) du boîtier sont munis de moyens d'étanchéité (22) réalisés de manière distincte de la pièce en matière plastique (1).

## Claims

1. Thermostatic valve intended to be fitted to a unit containing a liquid (5), for example a cooling circuit member such as a water case or oil crank case, of an automobile, and comprising, with a valve seat (6), a casing fitted with output means for the liquid, as well as means for securing it on the said unit containing a liquid (5) and, mounted on this casing, a flap (7) capable of co-operating with the seat; a thermostatic element (8) having a body (8a) integral with the flap (7) and a push rod (8b) supported on a stop means (9 to 11) integral with the casing; and a pressure spring (16) interposed between the flap (7) and a support (17) with the casing; said valve being of the type in which the said seat is formed by a part of plastic material (1), which constitutes likewise the casing of the device, the said securing means (3,4) of the casing and the said output means for the liquid (2) being in one piece with the part forming the valve seat (6), of the part of plastic material (1), characterised in that the part forming the valve seat (6), of the part of plastic material (1), is fitted with metallic reinforcement means (12;23) cast into the plastic material, and extending substantially over the periphery of the seat (6).

2. Thermostatic valve according to claim 1, characterised in that the said metallic reinforcement means (12;23) extend from the part forming the seat (6) as far as the part forming the securing means (3,4) of said piece of plastic material (1).

3. Thermostatic valve according to claim 2, characterised in that said part forming securing means is produced in the form of a strap (3) comprising at least two holes (4), for screwed units, and in that the said metallic reinforcement means (12;23) extend, at the locus of said holes (4), from one face to the other of the said strap 93).

4. Thermostatic valve according to one of claims I to 3, characterised in that said outlet means for the liquid are produced in the form of a connection (4) for an outlet duct for the liquid.

5. Thermostatic valve according to one of claims 1 to 4, characterised in that the stop means of the push rod (8b) of the thermostatic element (8) is formed by a partition (11) formed in one piece with the said piece of plastic material (1).

6. Thermostatic valve according to one of claims 1 to 4, characterised in that the stop means for the push rod (8b) of the thermostatic element (8) is formed by a metallic part with a U-shaped cross-section (25), cast into the said piece of plastic material (1).

7. Thermostatic valve according to one of claims 1 to 6, characterised in that said valve flap (7) is metallic.

8. Thermostatic valve according to one of claims 1 to 7, characterised in that said means of metallic reinforcement (12;23) form, by means of portions (21) extending to the exterior of the piece of plastic material (1), attachment units (20) for a metallic element (28) for pre-biasing the spring (16), which constitutes, by means of its end opposite the said attachment units, the said support (17) for the pressure spring (16).

9. Thermostatic valve according to claim 8, characterised in that said parts extending beyond receive the ends of the metallic member (28) just beneath the surface of the securing means in the form of a strap (3), in the presence of rims (29) of the strap preventing retraction of said metallic element.

10. Thermostatic valve according to one of claims 1 to 9, characterised in that said flap (7) and/or said metallic reinforcement means (12;23) and/or said metallic pre-biasing member (18) are made of sheet metal which is cut out and stamped, preferably from stainless steel sheet.

11. Thermostatic valve according to one of claims 1 to 10, characterised in that said means (3) of securing the casing are provided with sealing means (22) produced in a way separate from the piece of plastic material (1).

## Patentansprüche

1. Thermostatisches Ventil, mit dem ein ein Fluid (5) enthaltendes Element, beispielsweise ein Kühlkreiselement wie etwa ein Wasserkasten oder eine Ölwanne eines Kraftfahrzeugmotors, ausgerüstet ist und das versehen ist mit einem Ventilsitz (6), einem Gehäuse, das Fluidaustrittsmittel sowie Mittel für seine Befestigung an dem das Fluid (5) enthaltenden Element enthält, und, angebracht an dieses Gehäuse: einem Ventildeckel (7), der mit dem Sitz zusammenwirken kann; einem thermostatischen Element (8), das einen mit dem Ventildeckel (7) verbundenen Körper (8a) und einen Stößel (8b), der sich an einem mit dem Gehäuse verbundenen Anschlag (9 bis 11) abstutzt, enthält; und einer Druckfeder (16), die zwischen den Ventildeckel (7) und eine mit dem Gehäuse verbundene Abstützfläche (17) eingesetzt ist; wobei dieses Ventil von dem Typ ist, bei dem der Sitz durch ein Kunststoffteil (1) gebildet ist, das außerdem das Gehäuse des Geräts bildet, wobei die Befestigungsmittel (3, 4) des Gehäuses und die Fluidaustrittsmittel (2) einteilig mit dem den Ventilsitz (6) bildenden Teil des Kunststoffteils (1) ausgebildet sind, dadurch gekennzeichnet, daß der den Ventilsitz (6) des Kunststoffteils (1) bildende Teil mit metallischen Verstärkungsmitteln (12; 23) versehen ist, die in den Kunststoff eingegossen sind und sich im wesentlichen am Umfang des Sitzes (6) erstrecken.

2. Thermostatisches Ventil nach Anspruch 1, dadurch gekennzeichnet, daß sich die metallischen Verstärkungsmittel (12; 23) von dem den Sitz (6) bildenden Teil bis zu dem die Befestigungsmittel (3, 4) des Kunststoffteils (1) bildenden Teil erstrecken.

3. Thermostatisches Ventil nach Anspruch 2, dadurch gekennzeichnet, daß der Befestigungsmittel bildende Teil in Form eines Flansches (3) verwirklicht ist, der wenigstens zwei Bohrungen (4) für Verschraubungselemente enthält, und daß sich die metallischen Verstärkungsmittel (12; 23) am Ort der Bohrungen (4) von einer Fläche zur anderen des Flansches (3) erstrecken.

4. Thermostatisches Ventil nach einem der Ansprüche 1 bis 3, dadurch gekennzeichnet, daß die Fluidaustrittsmittel in Form eines Verbindungsstücks (2) für eine Fluidaustrittsrohrleitung verwirklicht sind.

5. Thermostatisches Ventil nach einem der Ansprüche 1 bis 4, dadurch gekennzeichnet, daß der Anschlag des Stößels (8b) des thermostatischen Elements (8) durch eine Wand (11) gebildet ist, die einteilig mit dem Kunststoffteil (1) ausgebildet ist.

6. Thermostatisches Ventil nach einem der Ansprüche 1 bis 4, dadurch gekennzeichnet, daß der Anschlag des Stößels (8b) des thermostatischen Elements (8) durch ein metallisches Teil (25) mit U-förmigem Querschnitt gebildet ist, das in das Kunststoffteil (1) eingegossen ist.

7. Thermostatisches Ventil nach einem der Ansprüche 1 bis 6, dadurch gekennzeichnet, daß die Ventilklappe (7) aus Metall ist.

8. Thermostatisches Ventil nach einem der Ansprüche 1 bis 7, dadurch gekennzeichnet, daß die metallischen Verstärkungsmittel (12; 23) über Abschnitte (21), die aus dem Kunststoffteil (1) vorstehen, Befestigungselemente (20) für ein metallisches Element (28) zur Vorbelastung der Feder (16) bilden, wobei das metallische Element (28) mit seinem den Befestigungselementen gegenüberliegenden Ende die Abstützfläche (17) für die Druckfeder (16) bildet.

9. Thermostatisches Ventil nach Anspruch 8, dadurch gekennzeichnet daß die vorstehenden Teile die Enden des metallischen Elements (28) direkt unter der Oberfläche der flanschförmigen Befestigungsmittel (3) in Gegenwart von Rändern (29) des Flansches, die das Herausziehen des metallischen Elements verhindern, aufnehmen.

10. Thermostatisches Ventil nach einem der Ansprüche 1 bis 9, dadurch gekennzeichnet, daß die Ventilklappe (7) und/oder die metallischen Verstärkungsmittel (12; 23) und/oder das metallische Vorbelastungselement (18) aus ausgestanztem und gezogenen Metallblech, zweckmäßig aus rostfreiem Stahlblech, gebildet sind.

11. Thermostatisches Ventil nach einem der Ansprüche 1 bis 10, dadurch gekennzeichnet, daß die Befestigungsmittel (3) des Gehäuses mit Dichtungsmitteln (22) versehen sind, die getrennt vom Kunststoffteil (1) verwirklicht sind.
